# EUROPEAN PATENT APPLICATION

(11) **EP 4 697 791 A1**
(43) Date of publication of application: **18.02.2026**
(21) Application number: 24788040.4
(22) Date of filing: 09.04.2024
(51) Int. Cl.: H04W 24/10

(54) **METHOD FOR REPORTING CHANNEL STATE INFORMATION (CSI) REPORT, AND METHOD FOR RECEIVING CSI REPORT**

(30) Priority: 14.04.2023 CN 202310405515
(71) Applicant: Vivo Mobile Communication Co., Ltd., Dongguan, Guangdong 523863 (CN)
(72) Inventor: JIANG, Lu, Dongguan, Guangdong 523863 (CN); CHEN, Xiaohang, Dongguan, Guangdong 523863 (CN); LI, Gen, Dongguan, Guangdong 523863 (CN)
(74) Representative: Germain Maureau
(86) International application number: PCT/CN2024/086710
(87) International publication number: WO 2024/212937

(57) **Abstract**

This application discloses a method for reporting a channel state information CSI report and a method for receiving a CSI report, and pertains to the field of communication technologies. The method for reporting a channel state information CSI report in embodiments of this application includes: determining, by a terminal according to target information, a target sub-configuration corresponding to CSI to be reported at a target CSI report occasion, where the target sub-configuration is one or more sub-configurations in a set of valid sub-configurations in a CSI report configuration, the set of valid sub-configurations includes at least one of the following: all sub-configurations in the CSI report configuration, one or more default sub-configurations in the CSI report configuration, or one or more activated sub-configurations in the CSI report configuration, and the target information includes at least one of the following: a target rule or target indication information; and reporting, by the terminal, a target CSI report at the target CSI report occasion, where the target CSI report includes CSI corresponding to the target sub-configuration.

## Description

### CROSS-REFERENCE

This application claims priority to Chinese Patent Application No. 202310405515.9, filed with the China National Intellectual Property Administration on April 14, 2023 and entitled "METHOD FOR REPORTING CHANNEL STATE INFORMATION CSI REPORT AND METHOD FOR RECEIVING CSI REPORT", which is incorporated herein by reference in its entirety.

### TECHNICAL FIELD

This application pertains to the field of communication technologies, and specifically relates to a method for reporting a channel state information CSI report and a method for receiving a CSI report.

### BACKGROUND

Currently, a terminal (User Equipment, UE) reports channel state information (Channel State Information, CSI) based on a CSI report configuration (CSI report configuration) configured by a network-side device, that is, the UE reports CSI based on the configuration from the network side.

However, in scenarios such as network side energy saving, due to dynamic changes in related parameters in the time domain, frequency domain, spatial domain, and power domain, one CSI report configuration may need to include multiple sub-configurations (which may also be referred to as sub-CSI report configurations), and these different sub-configurations respectively correspond to different spatial adaptation patterns (spatial adaptation pattern). In this case, no effective solution has yet been provided for how the UE should perform CSI report.

### SUMMARY

Embodiments of this application provide a method for reporting a channel state information CSI report and a method for receiving a CSI report, so as to address the problem of how to perform CSI report when one CSI report configuration includes multiple sub-configurations.

In a first aspect, a method for reporting a channel state information CSI report is provided and executed by a terminal, where the method includes: determining, by the terminal according to target information, a target sub-configuration corresponding to CSI to be reported at a target CSI report occasion, where the target sub-configuration is one or more sub-configurations in a set of valid sub-configurations in a CSI report configuration, the set of valid sub-configurations includes at least one of the following: all sub-configurations in the CSI report configuration, one or more default sub-configurations in the CSI report configuration, or one or more activated sub-configurations in the CSI report configuration, and the target information includes at least one of the following: a target rule or target indication information; and reporting, by the terminal, a target CSI report at the target CSI report occasion, where the target CSI report includes CSI corresponding to the target sub-configuration.

In a second aspect, a method for receiving a CSI report is provided and executed by a network-side device, where the method includes: configuring, by a network-side device, a CSI report configuration for a terminal, where the CSI report configuration includes multiple sub-configurations; receiving, by the network-side device, a target CSI report reported by the terminal at a target CSI report occasion, where the target CSI report includes CSI corresponding to a target sub-configuration, the target sub-configuration is one or more sub-configurations in a set of valid sub-configurations in the CSI report configuration, and the set of valid sub-configurations includes at least one of the following: all sub-configurations in the CSI report configuration, one or more default sub-configurations in the CSI report configuration, or one or more activated sub-configurations in the CSI report configuration.

In a third aspect, an apparatus for reporting a CSI report is provided, where the apparatus includes: a determining module, configured to determine, according to target information, a target sub-configuration corresponding to CSI to be reported at a target CSI report occasion, where the target sub-configuration is one or more sub-configurations in a set of valid sub-configurations in a CSI report configuration, the set of valid sub-configurations includes at least one of the following: all sub-configurations in the CSI report configuration, one or more default sub-configurations in the CSI report configuration, or one or more activated sub-configurations in the CSI report configuration, and the target information includes at least one of the following: a target rule or target indication information; and a reporting module, configured to report a target CSI report at the target CSI report occasion, where the target CSI report includes CSI corresponding to the target sub-configuration.

In a fourth aspect, an apparatus for receiving a CSI report is provided, where the apparatus includes: a configuration module, configured to configure a CSI report configuration for a terminal, where the CSI report configuration includes multiple sub-configurations; and a receiving module, configured to receive a target CSI report reported by the terminal at a target CSI report occasion, where the target CSI report includes CSI corresponding to a target sub-configuration, the target sub-configuration is one or more sub-configurations in a set of valid sub-configurations in the CSI report configuration, and the set of valid sub-configurations includes at least one of the following: all sub-configurations in the CSI report configuration, one or more default sub-configurations in the CSI report configuration, or one or more activated sub-configurations in the CSI report configuration.

In a fifth aspect, a terminal is provided, where the terminal includes a processor and a memory, the memory stores a program or instruction capable of running on the processor, and when the program or instruction is executed by the processor, the steps of the method according to the first aspect are implemented.

In a sixth aspect, a terminal is provided, including a processor and a communication interface, where the processor is configured to implement the steps of the method according to the first aspect, and the communication interface is configured to communicate with an external device.

In a seventh aspect, a network-side device is provided, where the network-side device includes a processor and a memory, the memory stores a program or instruction capable of running on the processor, and when the program or instruction is executed by the processor, the steps of the method according to the second aspect are implemented.

In an eighth aspect, a network-side device is provided, including a processor and a communication interface, where the processor is configured to implement the steps of the method according to the second aspect, and the communication interface is configured to communicate with an external device.

In a ninth aspect, a readable storage medium is provided, where the readable storage medium stores a program or instruction, and when the program or instruction is executed by a processor, the steps of the method according to the first aspect or the steps of the method according to the second aspect are implemented.

In a tenth aspect, a system for reporting a CSI report is provided, including: a terminal and a network-side device, where the terminal is configured to execute the steps of the method according to the first aspect, and the network-side device is configured to execute the steps of the method according to the second aspect.

In an eleventh aspect, a chip is provided, where the chip including a processor and a communication interface, where the communication interface is coupled to the processor, and the processor is configured to run a program or instruction to implement the method according to the first aspect, or to implement the method according to the second aspect.

In a twelfth aspect, a computer program/program product is provided, where the computer program/program product is stored in a storage medium, the program/program product being executed by at least one processor to implement the steps of the method for reporting a channel state information CSI report according to the first aspect, or to implement the steps of the method for receiving a CSI report according to the second aspect.

In the embodiments of this application, the terminal determines, according to target information, a target sub-configuration corresponding to CSI to be reported at a target CSI report occasion, and after determination of the target sub-configuration, reports a target CSI report including CSI corresponding to the target sub-configuration at the target CSI report occasion, which not only enables the terminal to acquire and report CSI when one CSI report configuration includes multiple sub-configurations, but also can reduce terminal energy consumption, thereby achieving the effect of saving energy consumption and obtaining a higher communication rate.

### BRIEF DESCRIPTION OF DRAWINGS

FIG. 1 is a block diagram of a wireless communication system to which embodiments of this application are applicable;
FIG. 2 is a schematic diagram of a network-side device dynamically turning off a subset of TXRUs according to embodiments of this application;
FIG. 3 is a schematic flowchart of a method for reporting a CSI report according to embodiments of this application;
FIG. 4 is a schematic diagram of a method for reporting a CSI report according to embodiments of this application;
FIG. 5 is a schematic diagram of a method for reporting a CSI report according to embodiments of this application;
FIG. 6 is a schematic diagram of a method for reporting a CSI report according to embodiments of this application;
FIG. 7 is a schematic diagram of a method for reporting a CSI report according to embodiments of this application;
FIG. 8 is a schematic diagram of a method for reporting a CSI report according to embodiments of this application;
FIG. 9 is a schematic diagram of a method for reporting a CSI report according to embodiments of this application;
FIG. 10 is a schematic flowchart of a method for receiving a CSI report according to embodiments of this application;
FIG. 11 is a schematic structural diagram of an apparatus for reporting a CSI report according to embodiments of this application;
FIG. 12 is a schematic structural diagram of an apparatus for receiving a CSI report according to embodiments of this application;
FIG. 13 is a schematic structural diagram of a communication device according to embodiments of this application;
FIG. 14 is a schematic diagram of a hardware structure of a terminal according to embodiments of this application; and
FIG. 15 is a schematic diagram of a hardware structure of a network-side device according to embodiments of this application.

### DESCRIPTION OF EMBODIMENTS

The technical solutions in the embodiments of this application will be clearly described below with reference to the accompanying drawings in the embodiments of this application. Obviously, the described embodiments are some embodiments of this application, rather than all of the embodiments. Based on the embodiments in this application, all other embodiments obtained by those of ordinary skill in the art fall within the scope of protection of this application.

The terms "first", "second" and the like in this application are used to distinguish similar objects, but not to describe a specific order or sequence. It should be understood that the terms used in this way are interchangeable under appropriate circumstances, so that the embodiments of this application can be implemented in an order other than those illustrated or described herein, and the objects distinguished by "first" and "second" are usually of one type, and the number of objects is not limited, for example, one or multiple first objects may be provided. In addition, "or" in this application means at least one of the connected objects. For example, "A or B" covers three schemes, that is, scheme one: including A and not including B; scheme two: including B and not including A; scheme three: including both A and B. The character "/" generally indicates that the associated objects before and after are in an "or" relationship. "Multiple" refers to two or more.

The term "indication" in this application can be either a direct indication (or explicit indication) or an indirect indication (or implicit indication). Among them, the direct indication can be understood as the transmitter explicitly informing the receiver of specific information, operations to be performed or request results in the transmitted indication; the indirect indication can be understood as the receiver determining corresponding information according to the indication transmitted by the transmitter, or making judgments and determining operations to be performed or request results according to the judgment results.

It is worth pointing out that the technology described in the embodiments of this application is not limited to long term evolution (Long Term Evolution, LTE)/LTE-advanced (LTE-Advanced, LTE-A) systems, but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or other systems. The terms "system" and "network" in the embodiments of this application are often used interchangeably, and the described technology can be used for the above-mentioned systems and radio technologies, as well as other systems and radio technologies. In the following descriptions, a new radio (New Radio, NR) system is described for an illustration purpose, and NR terms are used in most of the following descriptions, although these technologies may also be applied to systems other than NR systems, such as 6th generation (6th Generation, 6G) communication system.

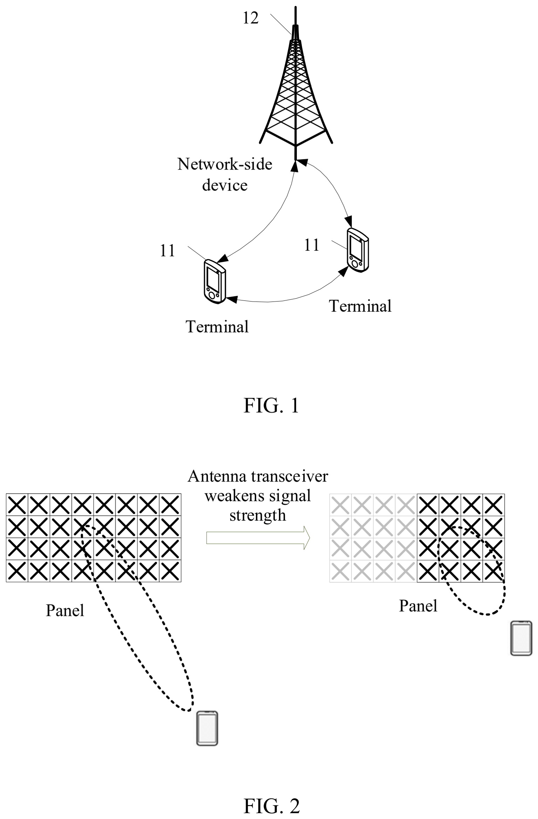

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), shipboard equipment, or pedestrian user equipment (Pedestrian User Equipment, PUE), a smart appliance (a household device with a wireless communication function, such as a refrigerator, a television, a washing machine, or furniture), a game console, a personal computer (Personal Computer, PC), a teller machine, or a self-service machine. The wearable device includes smartwatches, smart bands, smart earphones, smart glasses, smart jewelry (smart bangles, smart bracelets, smart rings, smart necklaces, smart foot bangles, and smart anklets), smart wristbands, and smart clothing. The vehicle user equipment may also be referred to as vehicle terminal, vehicle controller, vehicle module, vehicle component, vehicle chip, vehicle unit, or the like. It should be noted that the specific type of the terminal 11 is not limited in the embodiments of this application. The network-side device 12 may include an access network device or a core network device, where the access network device may also be referred to as a radio access network (RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as Node B (Node B, NB), evolved Node B (Evolved Node B, eNB), the next generation Node B (next generation Node B, gNB), New Radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP) or some other suitable term in the field. As long as the same technical effects are achieved, the base station is not limited to any specific technical terminology. It should be noted that in the embodiments of this application, only the base station in the NR system is taken as an example for introduction, and the specific type of the base station is not limited.

The core network device may include, but is not limited to, at least one of the following: core network node, core network function, mobility management entity (MME), access and mobility management function (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), and application function (Application Function, AF). It should be noted that in the embodiments of this application, only the core network device in the NR system is taken as an example for introduction, and the specific type of the core network device is not limited. But is not limited to at least one of the following: core network node, core network function, mobility management entity (MME), access and mobility management function (AMF), session management function (SMF), user plane function (UPF), policy control function (PCF), policy and charging rules function (PCRF), edge application server discovery function (EASDF), unified data management (UDM), unified data repository (UDR), home subscriber server (HSS), centralized network configuration (CNC), network repository function (NRF), network exposure function (NEF), local NEF (or L-NEF), binding support function (BSF), application function (AF), etc. It should be noted that in the embodiments of this application, only the core network device in the NR system is taken as an example for introduction, and the specific type of the core network device is not limited.

In order to better understand the technical solutions provided by this application, the technologies involved in this application are first introduced.

### 1. Network energy saving

Traditional base station energy saving mainly employs methods such as onsite power off, time-controlled switch, and cell blocking, but these methods are relatively extensive and cannot take user perception into account. In the 5G era, due to factors such as the adoption of 64T64R massive array antennas and support for larger bandwidth, the energy consumption of 5G base stations is higher than that of 4G base stations. In addition, due to higher frequency bands used in 5G, the coverage area per site is smaller. Achieving the coverage effect of 4G networks requires a deployment scale of 5G base stations that is 2 to 3 times that of 4G base stations. With greater device power consumption and a larger number of sites, greater power consumption will inevitably occur. The excessive power consumption of 5G has become a pain point in current network operations, and research on energy saving for 5G base station technology is imperative.

Base station energy saving can be divided into symbol shutdown, carrier shutdown, channel shutdown, and deep sleep technologies according to the implementation principle. Technical background of spatial domain energy saving: In massive multiple-input multiple-output (Multiple-Input Multiple-Output, MIMO) systems, large number of antennas and corresponding radio frequency devices result in high energy consumption. When the number of UEs in the cell is small, the capacity or coverage gain brought by MIMO may be redundant. In this case, the network side can dynamically turn off a subset of the transceiver units (Transceiver Unit, TxRU) to achieve network energy saving. As shown in FIG. 2, a subset of the TxRUs corresponding to the antenna unit can be turned off to serve a reduced number of users. After the subset of the TxRUs are turned off, the beam coverage range is weakened, and the beam width is increased.

### 2. CSI report

1. For periodic/semi-persistent CSI report, the UE reports CSI corresponding to a configured resource (set) at a corresponding time-frequency position, according to the periodic/semi-persistent CSI report configuration;
2. For aperiodic CSI report, CSI-AperiodicTriggerStateList IE is used to configure one or more aperiodic CSI report trigger states for the UE, that is, CSI-AperiodicTriggerState. Each CSI-AperiodicTriggerState includes one or more associated CSI-ReportConfig(s) and associated non-zero power channel state information reference signals (Non-Zero Power CSI-RS, NZP CSI-RS) and/or CSI interference measurement resources (CSI Interference Measurement, CSI-IM) and/or synchronization signal/PBCH block (Synchronization Signal/PBCH Block, SSB) resource sets for channel measurement and/or interference measurement. The UE reports CSI at a corresponding position according to an offset indicated by downlink control information (Downlink Control Information, DCI);

In the scenarios of network side energy saving, due to dynamic changes in related parameters in the time domain, frequency domain, spatial domain, and power domain, one CSI report configuration contains multiple CSI report sub-configurations, that is, one CSI report configuration may include multiple sub-CSI report configurations, and these different sub-CSI report configurations respectively correspond to different spatial adaptation patterns (spatial adaptation pattern).

The method for reporting a channel state information CSI report and the method for receiving a CSI report provided in embodiments of this application are described in detail below with reference to the accompanying drawings through some embodiments and their application occasions.

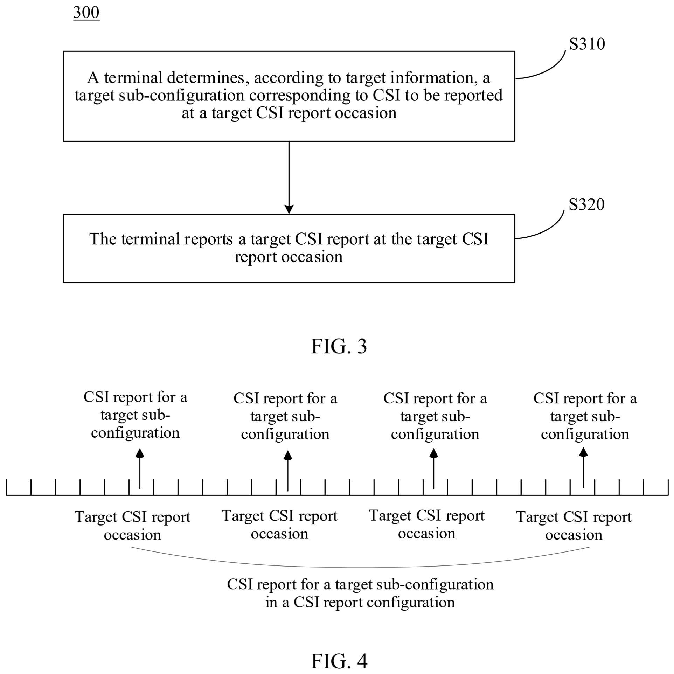

FIG. 3 is a schematic flowchart of a method for reporting a channel state information CSI report in embodiments of this application, and the method 300 can be executed by a terminal. In other words, the method can be executed by software or hardware installed on the terminal. As shown in FIG. 3, the method may include the following steps.

S310: The terminal determines, according to target information, a target sub-configuration corresponding to CSI to be reported at a target CSI report occasion.

The target sub-configuration is one or more sub-configurations in a set of valid sub-configurations in a CSI report configuration, the set of valid sub-configurations includes at least one of the following: all sub-configurations in the CSI report configuration, one or more default sub-configurations in the CSI report configuration, or one or more activated sub-configurations in the CSI report configuration, and the target information includes at least one of the following: a target rule or target indication information.

In the embodiments of this application, the CSI report configuration is used to configure parameters related to CSI report by the terminal, and the terminal reports a CSI according to the CSI report configuration.

The specific manifestation form of the target indication information may include downlink dynamic control signaling (Downlink Control Information, DCI) and medium access control control element (Medium Access Control Control Element, MAC CE), or configured by radio resource control protocol (Radio Resource Control, RRC).

It can be understood that CSI refers to information used to record and feedback channel conditions in the communication process. This information can be used to optimize the performance of wireless communication systems and improve network throughput and user experience. CSI has at least the following functions:
(1) CSI can be used to determine the quality and stability of a current channel, thereby selecting a suitable modulation and coding scheme;
(2) CSI can be used to determine the signal power, thereby avoiding situations where the signal is too strong or too weak. If the signal is too strong, it may cause interference to adjacent channels, affecting the overall network performance. If the signal is too weak, it may result in degraded communication quality and reduce user experience;
(3) CSI can be used to determine resource allocation between different users in multi-user scenarios. Based on channel conditions of different users, bandwidth and spectrum resources can be reasonably allocated, thereby improving the efficiency and fairness of the entire network; and
(4) CSI can be used for feedback control, such as feedback of network congestion information or error check information. By timely feedback of such information, network congestion and data transmission errors can be effectively avoided, thereby improving the performance and reliability of the entire network.

Therefore, in different functional scenarios, the network-side device needs CSI of different target sub-configurations. When the network-side device configures multiple target sub-configurations, the UE needs to first determine a target sub-configuration corresponding to CSI to be reported at a target CSI report occasion, so as to ensure that the acquired CSI meets the requirements of the target functional scenario required by the network-side device. In addition, in order to improve the flexibility of configuration, the network-side device may include multiple sub-configurations in the CSI report configuration. In a certain application scenario, some sub-configurations are not needed. Therefore, in order to reduce the resource consumption of the terminal, in CSI report, only the CSI corresponding to the sub-configuration at the target CSI report occasion needs to be reported, without reporting all CSIs corresponding to all sub-configurations.

In addition, the sub-configuration (sub-configuration) is a combination of one or more parameters across different configurations in time, frequency, spatial, and power domains, different parameter combinations correspond to different CSI measurement assumptions or patterns, and multiple sub-configurations are included in one report configuration. By way of example, the CSI report configuration (CSI- ReportConfig) may be:

```
         CSI-ReportConfig::={
             CSI-ResourceConfig1, CSI-ResourceConfig2, CSI-ResourceConfig3
            reportQuantity1, reportQuantity2, reportQuantity3
             codebookConfig1, codebookConfig2, codebookConfig3
             CSI-ReportPeriodicityAndOffset1, CSI-ReportPeriodicityAndOffset2,
             CSI-ReportPeriodicityAndOffset3;
          }
```

In this example, "CSI-ResourceConfig (CSI-RS resource configuration)", "reportQuantity (content of CSI report)", "codebookConfig (codebook configuration)", "CSI-ReportPeriodicityAndOffset (CSI report periodicity and offset)" in one CSI report configuration constitute a sub-configuration; that is, one or more parameters in the report configuration constitute a sub-configuration, corresponding to a spatial adaptation pattern. Since each CSI-ResourceConfig is associated with one resource set (resource set), it can also be regarded that different resource sets correspond to different spatial adaptation patterns (spatial adaptation pattern).

In another example,

```
         NZP-CSI-RS-Resource ::={
             CSI-RS-ResourceMapping1, CSI-RS-ResourceMapping2, CSI-RS-
 ResourceMapping3
            powerControlOffset1, powerControlOffset2, powerControlOffset3
          }
```

'CSI-RS-ResourceMapping', and 'powerControlOffset' in one NZP-CSI-RS-Resource constitute a sub-configuration; that is, one or more parameters in NZP-CSI-RS-Resource constitute a sub-configuration, corresponding to a spatial adaptation pattern or different power adaptation patterns (power adaptation pattern) assumed by feedback CSI.

S320: The terminal reports a target CSI report at the target CSI report occasion.

The target CSI report occasion refers to a time-frequency position for reporting a CSI report, as shown in FIG. 4.

In S320, the target CSI report is determined based on the target sub-configuration determined in S310, where the target CSI report includes CSI corresponding to the target sub-configuration.

In a possible implementation, the target rule is related to at least one of the following:
(1) a time domain position of the target CSI report occasion.
(2) a time domain position of a channel state information reference signal CSI-RS resource corresponding to the set of valid sub-configurations in the CSI report configuration.
(3) a time domain position of a CSI reference resource corresponding to the target CSI report occasion. or
(4) a sub-configuration index in the set of valid sub-configurations in the CSI report configuration.

A target CSI report occasion refers to a position of the target CSI report in the time domain, that is, the position of an OFDM symbol/slot where the target CSI report is located. The time domain position of the CSI-RS resource refers to the position of the OFDM symbol/slot where the CSI reference signal is located. In this implementation, the target sub-configuration corresponding to CSI to be reported at the target CSI report occasion can be accurately determined through the target rule.

In a possible implementation, that the terminal determines, according to the target rule, a target sub-configuration corresponding to CSI to be reported at the target CSI report occasion may include: determining the target sub-configuration based on the time domain position of the target CSI report occasion and the time domain position of the CSI-RS resource corresponding to the set of valid sub-configurations in the CSI report configuration.

Optionally, the determining the target sub-configuration based on the time domain position of the target CSI report occasion and the time domain position of the CSI-RS resource corresponding to the set of valid sub-configurations in the CSI report configuration may include: determining a sub-configuration corresponding to a first CSI-RS resource as the target sub-configuration, where the first CSI-RS resource is one or more CSI-RS resources closest to the time domain position of the target CSI report occasion among the CSI-RS resources corresponding to the set of valid sub-configurations.

The above implementation is described below through an embodiment.

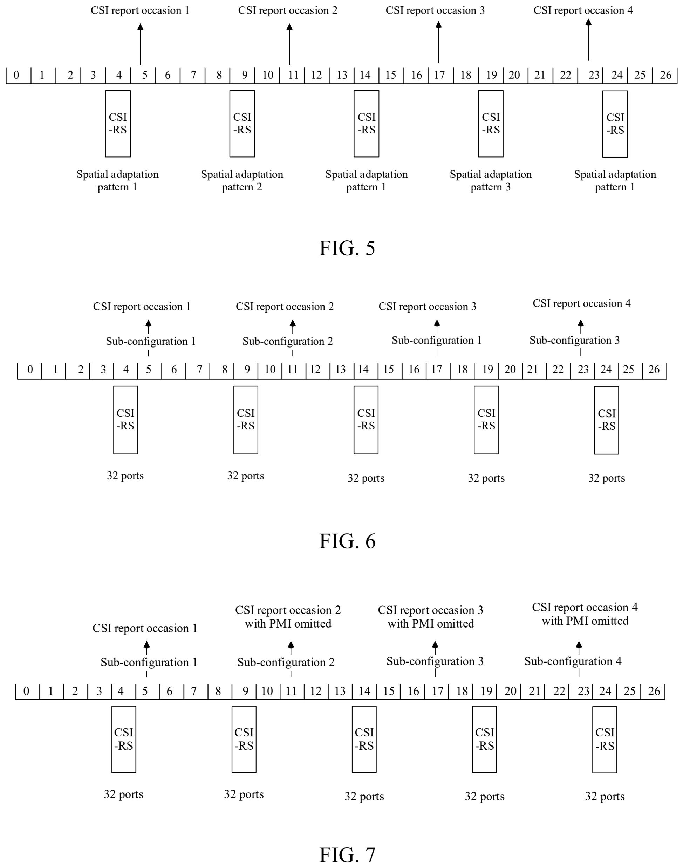

As shown in FIG. 5, assume that one CSI report configuration (One CSI report configuration) includes three valid sub-configurations (sub-configuration), and the three valid sub-configurations respectively correspond to three different spatial adaptation patterns (spatial adaptation pattern), namely spatial adaptation pattern 1 (spatial adaptation pattern 1), spatial adaptation pattern 2 (spatial adaptation pattern 2), spatial adaptation pattern 3 (spatial adaptation pattern 3).

For CSI report occasion 1 (report occasion 1), it is located at the time domain position of slot 5 (slot 5), and the sub-configuration of the CSI-RS for CSI measurement closest to the report occasion 1 is spatial adaptation pattern 1 at slot 4, then the UE reports CSI corresponding to spatial adaptation pattern 1 at report occasion 1.

For CSI report occasion 2 (report occasion 2), it is located at the time domain position of slot 11 (slot 11), and the sub-configuration of the CSI-RS for CSI measurement closest to the report occasion 2 is spatial adaptation pattern 2 at slot 9, then the UE reports CSI corresponding to spatial adaptation pattern 2 at the report occasion 2.

For CSI report occasion 3 (report occasion 3), it is located at the time domain position of slot 17 (slot 17), and the sub-configuration of the CSI-RS for CSI measurement closest to the report occasion 3 is spatial adaptation pattern 1 at slot 14, then the UE reports CSI corresponding to spatial adaptation pattern 1 at the report occasion 3.

For CSI report occasion 4 (report occasion 4), it is located at the time domain position of slot 23 (slot 23), and the sub-configuration of the CSI-RS for CSI measurement closest to the report occasion 4 is spatial adaptation pattern 3 at slot 19, then the UE reports CSI corresponding to spatial adaptation pattern 3 at the report occasion 4.

In a possible implementation, that the terminal determines, according to the target rule, a target sub-configuration corresponding to CSI to be reported at the target CSI report occasion may include: determining the target sub-configuration based on the time domain position of the CSI reference resource corresponding to the target CSI report occasion.

The above implementation is described below through an embodiment.

Continuing to refer to FIG. 5, assume that the CSI report configuration includes three valid sub-configurations (sub-configuration), and the three valid sub-configurations respectively correspond to three different spatial adaptation patterns (spatial adaptation pattern), namely spatial adaptation pattern 1 (spatial adaptation pattern 1), spatial adaptation pattern 2 (spatial adaptation pattern 2), spatial adaptation pattern 3 (spatial adaptation pattern 3), then, for CSI report occasion 1 (report occasion 1), it is located at the time domain position of slot 5 (slot 5), the CSI reference resource corresponding to the report occasion 1 is at slot 1, and the sub-configuration of the CSI-RS for CSI measurement closest to slot 1 is spatial adaptation pattern 1 at slot 0, then the UE reports CSI corresponding to spatial adaptation pattern 1 at the report occasion 1.

For CSI report occasion 2 (report occasion 2), it is located at the time domain position of slot 11 (slot 11), the CSI reference resource corresponding to the report occasion 2 is at slot 7, and the sub-configuration of the CSI-RS for CSI measurement closest to slot 7 is spatial adaptation pattern 1 at slot 4, then the UE reports CSI corresponding to spatial adaptation pattern 1 at the report occasion 2.

For CSI report occasion 3 (report occasion 3), it is located at the time domain position of slot 17 (slot 17), the CSI reference resource corresponding to the report occasion 3 is at slot 13, and the sub-configuration of the CSI-RS for CSI measurement closest to slot 13 is spatial adaptation pattern 2 at slot 9, then the UE reports CSI corresponding to spatial adaptation pattern 2 at the report occasion 3.

For CSI report occasion 4 (report occasion 4), it is located at the time domain position of slot 23 (slot 23), the CSI reference resource corresponding to the report occasion 4 is at slot 19, and the sub-configuration of the CSI-RS for CSI measurement closest to slot 19 is spatial adaptation pattern 1 at slot 14, then the UE reports CSI corresponding to spatial adaptation pattern 1 at the report occasion 4.

In another possible implementation, the determining the target sub-configuration based on the time domain position of the CSI reference resource corresponding to the target CSI report occasion may include at least one of the following:
(1) determining a sub-configuration used by a first physical downlink shared channel (Physical downlink shared channel, PDSCH) as the target sub-configuration, where the first PDSCH is one or more PDSCHs closest to the time domain position of the CSI reference resource corresponding to the target CSI report occasion;
(2) determining a sub-configuration corresponding to a second CSI-RS resource as the target sub-configuration, where the second CSI-RS resource is the CSI-RS resource closest to the time domain position of the CSI reference resource corresponding to the target CSI report occasion among the CSI-RS resources corresponding to the set of valid sub-configurations; or
(3) determining a sub-configuration corresponding to a third CSI-RS resource as the target sub-configuration, where the third CSI-RS resource is one or more CSI-RS resources at the time domain position of the CSI reference resource corresponding to the target CSI report occasion.

In a possible implementation, that the terminal determines, according to the target rule, a target sub-configuration corresponding to CSI to be reported at the target CSI report occasion may include: determining the target sub-configuration based on a target time domain position of the target CSI report occasion and a correspondence between the target time domain position and a sub-configuration in the set of valid sub-configurations in the CSI report configuration.

In a possible implementation, the determining the target sub-configuration based on a target time domain position of the target CSI report occasion and a correspondence between the time domain position and a sub-configuration in the set of valid sub-configurations in the CSI report configuration may include the following steps 1 and 2.

Step 1: Determining, by the terminal, at least one CSI report occasion included in multiple target CSI report periodicities.

In yet another possible implementation, the determining, by the terminal, at least one CSI report occasion included in multiple target CSI report periodicities includes: determining that the k-th periodicity includes CSI report occasions from the ((k-1)*N)-th to the (k*N-1)-th, where

N is at least one of the following:
(1) a predefined value;
(2) a value configured or indicated by the network;
(3) a value reported or indicated by the terminal;
(4) the number of sub-configurations in the set of valid sub-configurations in the CSI report configuration; or
(5) the quotient of the number of sub-configurations in the set of valid sub-configurations in the CSI report configuration divided by the number of CSIs corresponding to the sub-configurations included at each CSI report occasion; and k=1, 2, ..., K, K being the number of periodicities for CSI reporting.

In this implementation, the terminal can report CSI in multiple report periodicities. It can be understood that each report periodicity can include at least one CSI report occasion, and the terminal determines at least one report occasion among all report occasions for CSI reporting.

Step 2: Determining a target time domain position of the target CSI report occasion within the target CSI report periodicity, and determining a sub-configuration corresponding to the target time domain position in the correspondence to be the target sub-configuration.

In a possible implementation, the correspondence between a target time domain position and a sub-configuration in the set of valid sub-configurations in the CSI report configuration can be determined in the following manner: determining CSIs corresponding to sub-configurations to be reported at each target CSI report occasion within each target CSI report periodicity according to a configuration of a network-side device (the sub-configuration corresponding to the CSI is the sub-configuration corresponding to the target time domain position of the target CSI report occasion).

The above implementation is described below through an embodiment.

As shown in FIG. 6, assume that a 32-port CSI-RS has a transmission periodicity of 5 slots, and each time a 32-port CSI-RS is transmitted; a CSI report configuration is associated with the CSI-RS but includes three sub-configurations, which correspond to three different spatial adaptation patterns, namely spatial adaptation pattern 1 (spatial adaptation pattern 1), spatial adaptation pattern 2 (spatial adaptation pattern 2), spatial adaptation pattern 3 (spatial adaptation pattern 3), corresponding to configurations of 8 ports, 16 ports, and 32 ports, respectively. When the RRC configures a reporting pattern (pattern) as '01100111' for multiple sub-configuration CSIs, the UE reports sub-configuration 1 (that is, 8-port CSI) at the first CSI report occasion (CSI report occasion 1), reports sub-configuration 2 (that is, 16-port CSI) at the second CSI report occasion (CSI report occasion 2), reports sub-configuration 1 (that is, 8-port CSI) at the third CSI report occasion (CSI report occasion 3), reports sub-configuration 3 (that is, 32-port CSI) at the fourth CSI report occasion (CSI report occasion 4)..... In each subsequent periodicity, the CSIs of the sub-configurations are reported cyclically at report occasions according to the pattern until the report configuration is released.

In this embodiment, in the reporting pattern of CSIs corresponding to the sub-configurations, each sub-configuration is represented by two bits, the most significant two bits indicate a sub-configuration ID (sub-configuration ID) corresponding to CSI to be reported at the first CSI report occasion, the following two bits indicate a sub-configuration ID corresponding to CSI to be reported at the second CSI report occasion, the subsequent two bits indicate a sub-configuration ID corresponding to CSI to be reported at the third CSI report occasion, and the next two bits indicate a sub-configuration ID corresponding to the fourth CSI report occasion. Four CSI report occasions constitutes one cycle, and within each cycle, the four report occasions follow the above pattern for reporting.

For another example, each periodicity has 3 target report occasions that can report CSIs of target sub-configurations, each target report occasion may report one of two sub-configurations, represented by bit '0' and bit '1' respectively for the first sub-configuration and the second sub-configuration. If the network side configures the CSI report at the target report occasions in each periodicity as '010', it means that in each periodicity, CSI corresponding to the first sub-configuration is reported at the first target report occasion, CSI corresponding to the second sub-configuration is reported at the second target report occasion, and the CSI corresponding to the first sub-configuration is reported at the third target report occasion. It can be summarized as: When the network side configures the CSI reporting pattern of A target report occasions within the target periodicity as *'bᵢb*_{*i+*1}*b*_{*i+*2} ... *b*_{*i+A-*1}', at the A target report occasions within the target periodicity, CSI of the (*bᵢ*+1)-th target sub-configuration is reported at the (i+1)-th target report occasion, where *bᵢ* ∈ {0,1}.

In another possible implementation, the correspondence between a target time domain position and a sub-configuration in the set of valid sub-configurations in the CSI report configuration can be determined in the following manner: determining CSIs corresponding to sub-configurations to be reported at each target CSI report occasion within each target CSI report periodicity according to an indication of a network-side device (the sub-configuration corresponding to the CSI is the sub-configuration corresponding to the target time domain position of the target CSI report occasion).

In yet another possible implementation, the correspondence between a target time domain position and a sub-configuration in the set of valid sub-configurations in the CSI report configuration can be determined in the following manner: determining CSIs corresponding to sub-configurations to be reported at each CSI report occasion within each periodicity according to a predefined rule (the sub-configuration corresponding to the CSI is the sub-configuration corresponding to the target time domain position of the target CSI report occasion).

Optionally, CSI corresponding to the m-th sub-configuration is reported at the n-th report occasion in a report periodicity, where n=m or n mod N=m. It can be understood that, for example, when there are 3 report occasions in a report periodicity where CSIs of sub-configurations can be reported, CSI for the first sub-configuration is reported at the first report occasion, CSI for the second sub-configuration is reported at the second report occasion, and CSI for the third sub-configuration is reported at the third report occasion. In this case, n=m. For another example, when there are 2 report occasions for reporting in a report periodicity, CSI corresponding to the baseline sub-configuration (baseline sub-configuration) is reported at the first report occasion, and CSI corresponding to another sub-configuration is reported at the second report occasion.

It can be understood that, in the above implementation, since the correspondence between the target time domain positions and the sub-configurations in the set of valid sub-configurations in the CSI report configuration is determined, in the case of determining to perform CSI report at one or more target CSI report occasions, a target time domain position of a target CSI report occasion within the target CSI report periodicity is determined, and the sub-configuration corresponding to the target time domain position is taken as the target sub-configuration.

In a possible implementation, the determining, by a terminal according to the target rule, a target sub-configuration corresponding to CSI to be reported at the target CSI report occasion may include: selecting the target sub-configuration corresponding to CSI that meets a condition according to the target rule.

Further, in an implementation, that a sub-configuration to be reported at each target CSI report occasion within each target CSI report periodicity is determined according to the target rule may include at least one of the following.

(1) Determining to report CSI with the largest or smallest rank indication RI among CSIs corresponding to multiple activated sub-configurations at each target CSI report occasion within each target CSI report periodicity.

Continuing to refer to FIG. 6, assume that a 32-port CSI-RS has a transmission periodicity of 5 slots, and each time a 32-port CSI-RS is transmitted; a CSI report configuration is associated with the CSI-RS but includes three sub-configurations, which correspond to three different spatial adaptation patterns, namely spatial adaptation pattern 1 (spatial adaptation pattern 1), spatial adaptation pattern 2 (spatial adaptation pattern 2), spatial adaptation pattern 3 (spatial adaptation pattern 3), corresponding to configurations of 8 ports, 16 ports, and 32 ports, respectively. At each CSI report occasion, the UE selects CSI of the sub-configuration with the largest RI from CSIs corresponding to the three sub-configurations for reporting. As shown in FIG. 6, for CSI report occasion 1 (report occasion 1), which is located at the time domain position of slot 5 (slot 5), among the CSIs of three sub-configurations obtained at this report occasion 1, the RI of sub-configuration 1 is the largest. Therefore, at this report occasion 1, only the CSI corresponding to sub-configuration 1 needs to be reported. For CSI report occasion 2 (report occasion 2), which is located at the time domain position of slot 11 (slot 11), among the CSIs of three sub-configurations obtained at this report occasion 2, the RI of the CSI corresponding to sub-configuration 2 is the largest. Therefore, at this report occasion 2, the CSI corresponding to spatial adaptation pattern 2 is reported.

In the above example, it is also possible to report CSIs corresponding to the first two sub-configurations with the largest RIs at the target report occasion, that is, two CSIs are reported at each target report occasion.

(2) Determining to report CSI with the largest or smallest channel quality indicator (Channel quality indicator, CQI) among CSIs corresponding to multiple activated sub-configurations at each target CSI report occasion within each target CSI report periodicity.

In the embodiments of this application, the largest or smallest CQI refers to the CQI with the highest performance, and whether the CQI with the highest performance is the CQI with the largest value or the smallest value can be determined according to actual applications.

CQI is the index of a target row in the CQI table and used to describe the quality of the wireless channel. Therefore, when reporting CSI, selecting to report the CSI with the largest or smallest CQI can further improve the efficiency and quality of data transmission.

(3) Determining to report CSI with the largest or smallest CQI*R*RI value among CSIs corresponding to multiple activated sub-configurations at each target CSI report occasion within each target CSI report periodicity, where
R is the code rate, CQI is used to reflect the channel quality of a downlink PDSCH, RI is used to indicate the number of effective data layers of PDSCH, and selecting the CSI with the largest or smallest CQI*R*RI value is equivalent to selecting the CSI with the highest performance, thereby ensuring the reliability and rate of data transmission.

In another possible implementation, the selecting the target sub-configuration corresponding to CSI that meets a condition according to the target rule includes at least one of the following:
(1) determining to report one of CSIs corresponding to multiple activated sub-configurations at each target CSI report occasion in an order determined by the magnitude of RIs of the CSIs for various target CSI report occasions within each target CSI report periodicity;
(2) determining to report one of CSIs corresponding to multiple activated sub-configurations at each target CSI report occasion in an order determined by the magnitude of CQIs for various target CSI report occasions within each target CSI report periodicity; or
(3) determining to report one of CSIs corresponding to multiple activated sub-configurations at each target CSI report occasion in an order determined by the magnitude of reported CQI*R*RI for various target CSI report occasions within each target CSI report periodicity, where
CQI is the index of a target row in a CQI table, and R is the code rate.

It can be understood that, to ensure the smoothness and stability of CSI reporting, reporting can be performed in an order determined by the magnitude of CQIs and/or Rs and/or RIs.

In a possible implementation, the target indication information includes at least one of the following:
(1) a set of valid sub-configurations in the CSI report configuration;
(2) an identifier of a valid sub-configuration in the CSI report configuration;
(3) an identifier of the CSI report configuration;
(4) sub-configuration information corresponding to each target CSI report occasion within a target CSI report periodicity; or
(5) the number of CSIs to be reported at each target CSI report occasion within a target CSI report periodicity, where
the above identifier may be a corresponding ID or index. The sub-configuration information corresponding to each target CSI report occasion within a target CSI report periodicity may include the sub-configuration number, the sub-configuration identifier, time domain pattern of the sub-configuration, and the like.

In a possible implementation, the target sub-configuration is associated with at least one of the following parameters in the CSI report configuration:
(1) CSI-RS resource set (CSI-RS resource set).
(2) CSI-RS resource group (CSI-RS resource group) in a CSI-RS resource set.
(3) power offset parameter of CSI-RS resource relative to synchronization signal block SSB.
(4) physical downlink shared channel (Physical Downlink Shared Channel, PDSCH) power offset parameter assumed by a terminal for CSI reporting;

It can be understood that in calculating CSI, the terminal needs to use the power offset relative to PDSCH, that is, in calculating CSI, it needs to assume that the CSI is based on the power offset of a PDSCH. The power offset parameter corresponds to powercontroloffset in a current 3GPP protocol. When the UE calculates CSI feedback, the assumed ratio of PDSCH EPRE (energy per RE) to NZP CSI-RS EPRE is within a value range of [-8, 15] dB, with a step size of 1 dB.
(5) time-frequency resource mapping of CSI-RS (that is, CSI-RS resource Mapping);
(6) antenna parameters, where the antenna parameters include: number of antenna ports and an antenna shutdown pattern;
(7) content of CSI report, where
   the content of CSI report corresponds to reportQuantity in a 3GPP protocol; or
(8) codebook configuration.

In a possible implementation, the parameters in the CSI report configuration include multiple parameters, and each parameter corresponds to multiple values, the i-th sub-configuration is a set consisting of the i-th value of each of the multiple parameters of the CSI report configuration parameters, where i=1, 2, ..., M, M being the number of parameters in the CSI report configuration. Optionally, the multiple parameters can be stored in the form of a list, for example, each parameter and its multiple values occupy one row of the list.

It should be noted that the CSI resources are configured according to CSI resource sets, and each UE can be configured with S≥1 resource set lists csi-RS-resourceSetList through CSI resource configuration signaling CSI-ResourceConfig. Each CSI-RS resource set list contains multiple CSI resource sets, and each resource set is consisted of resources for channel measurement and resources for interference measurement, where the resources for channel measurement can be configured as an NZP CSI-RS resource set or SSB-based resource set.

In a possible implementation, the reporting, by the terminal, a target CSI report at the target CSI report occasion includes: receiving, by the terminal, target indication information, where the target indication information includes sub-configuration information corresponding to each target CSI report occasion within a target CSI report periodicity and the number of CSIs to be reported at each target CSI report occasion within a target CSI report periodicity. For example, there are three target CSI report occasions within a target periodicity, the network side configures through RRC that within each target periodicity, the UE reports CSIs corresponding to all sub-configurations at the first target CSI report occasion (that is, reporting multiple CSIs), reports only the CSI corresponding to the sub-configuration with the largest number of ports among multiple sub-configurations at the second target CSI report occasion (that is, reporting a single CSI), and reports only the CSI corresponding to the sub-configuration with the largest R at the third target report occasion I (that is, reporting a single CSI).

For another example, there are five target CSI report occasions within the target periodicity, and the associated report configuration includes four sub-configurations. The network side configures through RRC that the UE reports CSIs corresponding to all sub-configurations at the first target CSI report occasion within each target periodicity (that is, the number of configured reported CSI is four), and for subsequent four target CSI report occasions, a single CSI is reported at each CSI report occasion in sequence, corresponding to an order of four sub-configurations in the network side RRC configuration.

In a possible implementation, the reporting, by the terminal, a target CSI report at the target CSI report occasion includes at least one of the following.

(1) Reporting, by the terminal, CSI corresponding to CSI report content configured by the target sub-configuration at the target CSI report occasion.

In a case that there is no specified rule at the terminal or network-side device, the terminal only needs to report CSI corresponding to CSI report content configured by the target sub-configuration.

(2) In a case that the target sub-configuration belongs to a baseline sub-configuration, reporting, by the terminal, complete CSI at the target CSI report occasion.

In CSI reporting, a baseline sub-configuration is the reference standard for remaining sub-configurations, and CSIs corresponding to the remaining sub-configurations can be further optimized or omitted on the basis of the CSI corresponding to the baseline sub-configuration.

In a case that the target sub-configuration belongs to the baseline sub-configuration, the CSI corresponding to the CSI report content configured by the target sub-configuration is fully reported, that is, the channel quality indicator (Channel Quality Indicator, CQI), CRI, rank indication (rank indication, RI), precoding matrix indicator (Precoding Matrix Indicator, PMI), and the like in the CSI are fully reported.

(3) In a case that the target sub-configuration does not belong to a baseline sub-configuration, reporting, by the terminal, CSI that does not include at least one of CQI, CRI, RI, or PMI at the target CSI report occasion.

By way of example, as shown in FIG. 7, assume that one CSI report configuration (report configuration) includes 4 sub-configurations: sub-configuration 1, sub-configuration 2, sub-configuration 3, and sub-configuration 4, where sub-configuration 1 corresponds to 32 ports, sub-configuration 2 corresponds to 16 ports, sub-configuration 3 corresponds to 8 ports, sub-configuration 4 corresponds to 4 ports, and the RRC has configured to report CSIs for sub-configuration 1/2/3/4 respectively at the four report occasions in FIG. 5. The CSI corresponding to the first sub-configuration is fully reported, and CSIs corresponding to the remaining three sub-configurations can be reported with PMI omitted.

(4) In a case that the target sub-configuration does not belong to a baseline sub-configuration, in CSI to be reported by the terminal at the target CSI report occasion, CQI being a differential CQI relative to the baseline sub-configuration.

(5) In a case that the target sub-configuration does not belong to a baseline sub-configuration, in CSI to be reported by the terminal at the target CSI report occasion, RI being a differential RI relative to the baseline sub-configuration.

(6) In a case that the target sub-configuration does not belong to a baseline sub-configuration, in CSI to be reported by the terminal at the target CSI report occasion, CRI being a differential CRI relative to the baseline sub-configuration.

For the above (4) to (6), the following takes CQI being a differential CQI relative to the baseline sub-configuration as an example for description.

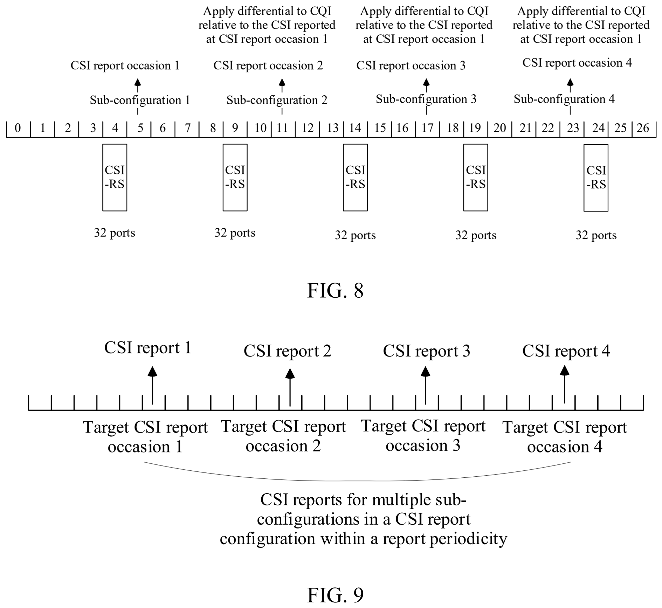

As shown in FIG. 8, assume that one CSI report configuration (report configuration) includes 4 sub-configurations: sub-configuration 1, sub-configuration 2, sub-configuration 3, and sub-configuration 4, where sub-configuration 1 corresponds to 32 ports, sub-configuration 2 corresponds to 16 ports, sub-configuration 3 corresponds to 8 ports, sub-configuration 4 corresponds to 4 ports, and the RRC has configured to report CSIs for sub-configuration 1/2/3/4 respectively at the four report occasions in FIG. 6.

The CSI corresponding to the first sub-configuration (sub-configuration 1) is fully reported. Regarding the CQI portion of the CSIs corresponding to the remaining three sub-configurations, a differential CQI relative to the CQI in the CSI corresponding to sub-configuration 1 as a baseline sub-configuration is reported. For example,
the CQI corresponding to the first sub-configuration sub-configuration 1 is '0110';
the CQI originally to be reported by the second sub-configuration sub-configuration 2 is '0111'. Now, only a differential value relative to sub-configuration 1 needs to be reported. Since it differs by 1 from the CSI corresponding to sub-configuration 1, only '01' needs to be reported;
the CQI originally to be reported by the third sub-configuration sub-configuration 3 is '1000'. Now, only a differential value relative to sub-configuration 1 needs to be reported. Since it differs by 2 from the CSI corresponding to sub-configuration 1, only '10' needs to be reported; and
the CQI originally to be reported by the fourth sub-configuration sub-configuration 4 is '0101'. Now, only a differential value relative to sub-configuration 1 needs to be reported. Since it differs by 3 from the CSI corresponding to sub-configuration 1, only '11' needs to be reported.

In an implementation, the reporting, by the terminal, a target CSI report at the target CSI report occasion includes: reporting, by the terminal, CSI corresponding to the target sub-configuration at the target CSI report occasion based on CSI reported at a first CSI report occasion.

In another possible implementation, the first CSI report occasion includes at least one of the following.
(1) A CSI report occasion including a baseline sub-configuration closest to the target CSI report occasion.
(2) A CSI report occasion including a baseline sub-configuration a specific time before the target CSI report occasion.
   For the above (1) and (2), the first CSI report occasion is a CSI report occasion that is closest to the target CSI report occasion or closest before a specific time and includes a baseline sub-configuration. As shown in FIG. 9, the CSI report occasion of the baseline sub-configuration is target CSI report occasion 1, then a corresponding sub-configuration CSI is reported at target CSI report occasion 2, target CSI report occasion 3, and target CSI report occasion 4, which all take target CSI report occasion 1 as the first CSI report occasion. For example, a differential value is reported for CQIs of CSI report 2, CSI report 3, and CSI report 4, which all take CSI report 1 as the baseline.
(3) A CSI report occasion configured by a network-side device.
(4) A CSI report occasion indicated by a network-side device.
   For the above (3) and (4), the first CSI report occasion is the CSI report occasion configured or indicated by the base station. For example, the network-side device configures target CSI report occasion 1 as the first CSI report occasion, and a corresponding sub-configuration CSI is reported at target CSI report occasion 2, target CSI report occasion 3, and target CSI report occasion 4, which all take target CSI report occasion 1 as the baseline; or, no omission is allowed in CSI report 1, while the PMI in CSI report 2, CSI report 3, and CSI report 4 may be omitted, and for the CQI in CSI report 2, CSI report 3, and CSI report 4, a differential CQI relative to the CQI of CSI report 1 may be reported.
(5) A CSI report occasion at a specific position in each report periodicity.

The first target CSI report occasion is the first CSI report occasion, then a corresponding sub-configuration CSI is reported at the second target CSI report occasion, the third target CSI report occasion, and the fourth target CSI report occasion which all take the first target CSI report occasion as the baseline. By way of example, the specific position may be the earliest time domain position among all target CSI report occasions in each report periodicity.

In a possible implementation, the baseline sub-configuration includes at least one of the following:
(1) a baseline sub-configuration configured by a network-side device;
(2) a sub-configuration with the smallest index in the set of valid sub-configurations;
(3) a sub-configuration with the largest index in the set of valid sub-configurations;
(4) a sub-configuration with the largest number of antenna ports in the set of valid sub-configurations;
(5) a sub-configuration with the smallest PDSCH power offset assumed by CSI report in the set of valid sub-configurations;
(6) a sub-configuration with the largest PDSCH power offset assumed by CSI report in the set of valid sub-configurations;
(7) a sub-configuration with the smallest power offset of a corresponding CSI-RS relative to PDSCH in the set of valid sub-configurations; or
(8) a sub-configuration with the largest power offset of a corresponding CSI-RS relative to PDSCH in the set of valid sub-configurations.

In a possible implementation, in a case that the target information includes the target rule, the target CSI report further includes a target identifier, and the target identifier is used to indicate relevant information of the target sub-configuration. In another possible implementation, the target identifier includes at least one of the following:
(1) an identifier of a target sub-configuration; where
   the identifier may be ID or index. In addition, when CSIs of multiple sub-configurations are reported at multiple target CSI report occasions, the Ids or indexes of the sub-configurations are carried when the UE reports the CSI, so as to indicate to the network-side device which sub-configuration the reported CSI corresponds to;
(2) a configuration order of a target sub-configuration among all valid sub-configurations; where
   it can be understood that which ordinal position the target sub-configuration occupies among all valid sub-configurations; or
(3) a configuration order of a target sub-configuration among all sub-configurations; where
   it can be understood that which ordinal position the target sub-configuration occupies among all sub-configurations.

The above implementation is described below through an embodiment.

The network-side device configures through RRC that one CSI report configuration includes 4 sub-configurations (with Id of 0, 1, 2, 3), among which 3 activated sub-configurations (with Id of 0, 2, 3) are valid. The network-side device configures 3 report occasions within a report periodicity at which sub-configuration CSIs can be reported, namely three target CSI report occasions. The UE determines a sub-configuration corresponding to CSI to be reported at each target CSI report occasion according to a default rule, and sequentially reports the CSIs in an ascending order of Id numbers of the sub-configurations according to the time sequence of the target CSI report occasions. To be specific, CSI corresponding to a sub-configuration with Id=0 is reported at the first target CSI report occasion, CSI corresponding to a sub-configuration with Id=2 is reported at the second target CSI report occasion, and CSI corresponding to a sub-configuration with Id=3 is reported at the third target CSI report occasion. In addition, before reporting, the CSI to be reported at the first target CSI report occasion is taken as baseline CSI, then for CQI in the CSIs to be reported at the subsequent two target CSI report occasions, with CQI in the baseline CSI as a baseline, a differential CQI relative to the baseline CQI in the baseline CSI is reported.

Optionally, the network-side device configures 3 CSI report occasions within a report periodicity at which sub-configuration CSIs can be reported, namely three target CSI report occasions. The UE determines a sub-configuration corresponding to CSI to be reported at each target CSI report occasion according to a default rule, where the default rule is: the first target CSI report occasion reports a CSI corresponding to a sub-configuration with the largest number of ports among all activated sub-configurations, and reporting is performed at subsequent target CSI report occasions in ascending order of the Id numbers of the remaining sub-configurations. For example, assume that sub-configuration Id=0 corresponds to 8 ports, sub-configuration Id=1 corresponds to 16 ports, and sub-configuration Id=2 corresponds to 32 ports. The sub-configuration with the largest number of ports is sub-configuration Id=2. Accordingly, at the first target CSI report occasion, the CSI corresponding to sub-configuration Id=2 (32 ports) is reported; at the second target CSI report occasion, the CSI corresponding to sub-configuration Id=0 is reported; and at the third target CSI report occasion, the CSI corresponding to sub-configuration Id=3 is reported.

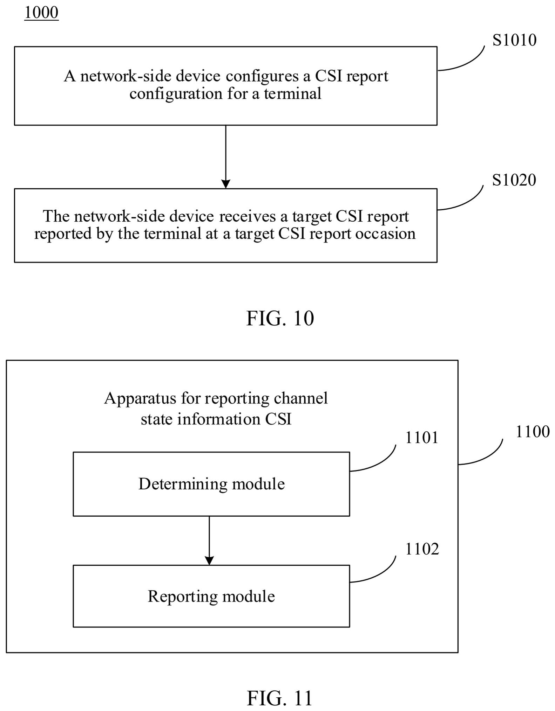

FIG. 10 is a schematic flowchart of a method for receiving a CSI report in embodiments of this application, and the method 1000 may be executed by a network-side device. In other words, the method may be executed by software or hardware installed on the network-side device. As shown in FIG. 10, the method may include the following steps.

S1010: The network-side device configures a CSI report configuration for a terminal, where
the CSI report configuration includes multiple sub-configurations.

S1020: The network-side device receives a target CSI report reported by the terminal at a target CSI report occasion; where
the target CSI report includes CSI corresponding to a target sub-configuration, the target sub-configuration is one or more sub-configurations in a set of valid sub-configurations in the CSI report configuration, and the set of valid sub-configurations includes at least one of the following: all sub-configurations in the CSI report configuration, one or more default sub-configurations in the CSI report configuration, or one or more activated sub-configurations in the CSI report configuration.

For the CSI report configuration and specific content of sub-configurations in the CSI report configuration, reference is made to the description in the method embodiment shown in FIG. 3, and details are not repeated here.

In the embodiments of this application, the network-side device configures the CSI report configuration for the terminal, and receives the target CSI report reported by the terminal at the target CSI report occasion based on the CSI report configuration. The CSI report configuration not only helps the terminal to acquire accurate CSI to meet actual application scenarios, but also can address the problem of increased terminal energy consumption when one CSI report configuration includes multiple sub-configurations, thereby achieving the effect of saving energy consumption and obtaining a higher communication rate.

In a possible implementation, the target CSI report further includes a target identifier, and the target identifier is used to indicate relevant information of the target sub-configuration. Through the target identifier, the network-side device can determine a sub-configuration corresponding to CSI in the target CSI report reported at the target report occasion.

For example, the target identifier may include at least one of the following:
(1) an identifier of a target sub-configuration;
(2) a configuration order of a target sub-configuration among all valid sub-configurations; or
(3) a configuration order of a target sub-configuration among all sub-configurations.

Through the above target identifier, the network-side device can determine the sub-configuration corresponding to the received CSI.

In a possible implementation, the method further includes: transmitting, by the network-side device, target indication information to the terminal, wherein the target indication information is used to determine the target sub-configuration corresponding to CSI to be reported at the target CSI report occasion. Through this possible implementation, the network-side device can know the target sub-configuration in the CSI report configuration corresponding to the CSI reported by the terminal at the target CSI report occasion.

In a possible implementation, the target indication information includes at least one of the following:
(1) a set of valid sub-configurations in the CSI report configuration;
(2) an identifier of a valid sub-configuration in the CSI report configuration;
(3) an identifier of the CSI report configuration;
(4) sub-configuration information corresponding to each target CSI report occasion within a target CSI report periodicity; or
(5) the number of CSIs to be reported at each target CSI report occasion within a target CSI report periodicity.

The above method provided in the embodiments of this application is a method executed by the network-side device and corresponding to method 300. For relevant descriptions, reference can be made to the description in method 300, and details are not repeated here.

Through the above implementations provided in the embodiments of this application, the terminal can reduce the overhead of reporting CSI.

FIG. 11 is a schematic structural diagram of an apparatus for reporting a CSI report according to embodiments of this application. As shown in FIG. 11, the apparatus 1100 mainly includes a determining module 1101 and a reporting module 1102.

In embodiments of this application, the determining module 1101 is configured to determine, according to target information, a target sub-configuration corresponding to CSI to be reported at a target CSI report occasion, where the target sub-configuration is one or more sub-configurations in a set of valid sub-configurations in a CSI report configuration, the set of valid sub-configurations includes at least one of the following: all sub-configurations in the CSI report configuration, one or more default sub-configurations in the CSI report configuration, or one or more activated sub-configurations in the CSI report configuration, and the target information includes at least one of the following: a target rule or target indication information; the reporting module 1102 is configured to report a target CSI report at the target CSI report occasion, where the target CSI report includes CSI corresponding to the target sub-configuration.

In a possible implementation, the target rule is related to at least one of the following: a time domain position of the target CSI report occasion; a time domain position of a channel state information reference signal CSI-RS resource corresponding to the set of valid sub-configurations in the CSI report configuration; a time domain position of a CSI reference resource corresponding to the target CSI report occasion; or a sub-configuration index in the set of valid sub-configurations in the CSI report configuration.

In a possible implementation, the determining module 1101 determining, according to target information, a target sub-configuration corresponding to CSI to be reported at a target CSI report occasion includes at least one of the following:
determining the target sub-configuration based on the time domain position of the target CSI report occasion and the time domain position of the CSI-RS resource corresponding to the set of valid sub-configurations in the CSI report configuration;
determining the target sub-configuration based on the time domain position of the CSI reference resource corresponding to the target CSI report occasion;
determining the target sub-configuration based on a target time domain position of the target CSI report occasion and a correspondence between the target time domain position and a sub-configuration in the set of valid sub-configurations in the CSI report configuration; or
selecting the target sub-configuration corresponding to CSI that meets a condition according to the target rule.

In a possible implementation, the determining module 1101 determining, according to target information, a target sub-configuration corresponding to CSI to be reported at a target CSI report occasion includes: determining a sub-configuration corresponding to a first CSI-RS resource as the target sub-configuration, where the first CSI-RS resource is one or more CSI-RS resources closest to the time domain position of the target CSI report occasion among the CSI-RS resources corresponding to the set of valid sub-configurations.

In a possible implementation, the determining module 1101 determining, according to target information, a target sub-configuration corresponding to CSI to be reported at a target CSI report occasion includes at least one of the following:
determining a sub-configuration used by a first PDSCH as the target sub-configuration, where the first PDSCH is one or more PDSCHs closest to the time domain position of the CSI reference resource corresponding to the target CSI report occasion;
determining a sub-configuration corresponding to a second CSI-RS resource as the target sub-configuration, where the second CSI-RS resource is a CSI-RS resource closest to the time domain position of the CSI reference resource corresponding to the target CSI report occasion among the CSI-RS resources corresponding to the set of valid sub-configurations; or
determining a sub-configuration corresponding to a third CSI-RS resource as the target sub-configuration, where the third CSI-RS resource is one or more CSI-RS resources at the time domain position of the CSI reference resource corresponding to the target CSI report occasion.

In a possible implementation, the determining module 1101 determining the target sub-configuration based on the target time domain position of the target CSI report occasion and the correspondence between the target time domain position and the sub-configurations in the set of valid sub-configurations in the CSI report configuration includes:
determining at least one CSI report occasion included in multiple target CSI report periodicities;
determining sub-configurations to be reported at each target CSI report occasion within each target CSI report periodicity; and
determining a target time domain position of the target CSI report occasion within the target CSI report periodicity, and determining a sub-configuration corresponding to the target time domain position in the correspondence to be the target sub-configuration.

In a possible implementation, the determining module 1101 determining at least one CSI report occasion included in multiple target CSI report periodicities includes: determining that the k-th target CSI report periodicity includes CSI report occasions from the ((k-1)*N)-th to the (k*N-1)-th; where
N is at least one of the following:
a predefined value;
a value configured or indicated by the network;
a value reported or indicated by the terminal;
the number of sub-configurations in the set of valid sub-configurations in the CSI report configuration; or
the quotient of the number of sub-configurations in the set of valid sub-configurations in the CSI report configuration divided by the number of CSIs corresponding to the sub-configurations included at each CSI report occasion; and
k=1, 2, ..., K, K being the number of periodicities for CSI reporting.

In a possible implementation, the determining module 1101 is also configured to determine the correspondence through at least one of the following:
determining CSIs corresponding to sub-configurations to be reported at each target CSI report occasion within each target CSI report periodicity according to a configuration of a network-side device;
determining CSIs corresponding to sub-configurations to be reported at each target CSI report occasion within each target CSI report periodicity according to an indication of a network-side device; or
determining CSIs corresponding to sub-configurations to be reported at each CSI report occasion within each periodicity according to a predefined rule.

In a possible implementation, the determining module 1101 selecting the target sub-configuration corresponding to CSI that meets a condition according to the target rule includes at least one of the following:
determining to report CSI with the largest or smallest rank indication RI among CSIs corresponding to multiple activated sub-configurations at each target CSI report occasion within each target CSI report periodicity;
determining to report CSI with the largest or smallest channel quality indicator CQI among CSIs corresponding to multiple activated sub-configurations at each target CSI report occasion within each target CSI report periodicity; or
determining to report CSI with the largest or smallest CQI*R*RI value among CSIs corresponding to multiple activated sub-configurations at each target CSI report occasion within each target CSI report periodicity; where CQI is the index of a target row in a CQI table, and R is the code rate.

In a possible implementation, the determining module 1101 selecting the target sub-configuration corresponding to CSI that meets a condition according to the target rule includes at least one of the following:
determining to report one of CSIs corresponding to multiple activated sub-configurations at each target CSI report occasion in an order determined by the magnitude of RIs of the CSIs for various target CSI report occasions within each target CSI report periodicity;
determining to report one of CSIs corresponding to multiple activated sub-configurations at each target CSI report occasion in an order determined by the magnitude of CQIs for various target CSI report occasions within each target CSI report periodicity;
determining to report one of CSIs corresponding to multiple activated sub-configurations at each target CSI report occasion in an order determined by the magnitude of reported CQI*R*RI for various target CSI report occasions within each target CSI report periodicity; where CQI is the index of the target row in the CQI table, and R is the code rate.

In a possible implementation, the target indication information includes at least one of the following:
a set of valid sub-configurations in the CSI report configuration;
an identifier of a valid sub-configuration in the CSI report configuration;
an identifier of the CSI report configuration;
sub-configuration information corresponding to each target CSI report occasion within a target CSI report periodicity; or
the number of CSIs to be reported at each target CSI report occasion within a target CSI report periodicity.

In a possible implementation, the target sub-configuration is associated with at least one of the following parameters in the CSI report configuration:
CSI-RS resource set;
CSI-RS resource group in a CSI-RS resource set;
power offset parameter of CSI-RS resource relative to synchronization signal block SSB;
PDSCH power offset parameter assumed for CSI reporting;
time-frequency resource mapping of CSI-RS;
antenna parameters, where the antenna parameters include: number of antenna ports and an antenna shutdown pattern;
content of CSI report; or
codebook configuration.

In a possible implementation, the parameters in the CSI report configuration include multiple parameters, and each parameter corresponds to multiple values, the i-th sub-configuration is a set consisting of the i-th value of each of the multiple parameters of the CSI report configuration parameters, where i=1, 2, ..., M, M being the number of parameters in the CSI report configuration.

In a possible implementation, the reporting module 1102 reporting a target CSI report at the target CSI report occasion includes at least one of the following:
reporting, CSI corresponding to CSI report content configured by the target sub-configuration at the target CSI report occasion;
in a case that the target sub-configuration belongs to a baseline sub-configuration, reporting complete CSI at the target CSI report occasion;
in a case that the target sub-configuration does not belong to a baseline sub-configuration, reporting CSI that does not comprise at least one of CQI, CRI, RI, or PMI at the target CSI report occasion;
in a case that the target sub-configuration does not belong to a baseline sub-configuration, in CSI to be reported by the terminal at the target CSI report occasion, CQI being a differential CQI relative to the baseline sub-configuration;
in a case that the target sub-configuration does not belong to a baseline sub-configuration, in CSI to be reported by the terminal at the target CSI report occasion, RI being a differential RI relative to the baseline sub-configuration;
in a case that the target sub-configuration does not belong to a baseline sub-configuration, in CSI to be reported by the terminal at the target CSI report occasion, CRI being a differential CRI relative to the baseline sub-configuration.

In a possible implementation, the reporting module 1102 reporting a target CSI report at the target CSI report occasion includes: reporting CSI corresponding to the target sub-configuration at the target CSI report occasion based on CSI reported at a first CSI report occasion.

In a possible implementation, the first CSI report occasion includes at least one of the following:
a CSI report occasion comprising a baseline sub-configuration closest to the target CSI report occasion;
a CSI report occasion comprising a baseline sub-configuration a specific time before the target CSI report occasion;
a CSI report occasion configured by a network-side device;
a CSI report occasion indicated by a network-side device; or
a CSI report occasion at a specific position in each report periodicity.

In a possible implementation, the baseline sub-configuration includes at least one of the following:
a baseline sub-configuration configured by a network-side device;
a sub-configuration with the smallest index in the set of valid sub-configurations;
a sub-configuration with the largest index in the set of valid sub-configurations;
a sub-configuration with the largest number of antenna ports in the set of valid sub-configurations;
a sub-configuration with the smallest PDSCH power offset assumed by CSI report in the set of valid sub-configurations;
a sub-configuration with the largest PDSCH power offset assumed by CSI report in the set of valid sub-configurations;
a sub-configuration with the smallest power offset of a corresponding CSI-RS relative to PDSCH in the set of valid sub-configurations; or
a sub-configuration with the largest power offset of a corresponding CSI-RS relative to PDSCH in the set of valid sub-configurations.

In a possible implementation, in a case that the target information includes the target rule, the target CSI report further comprises a target identifier, and the target identifier is used to indicate relevant information of the target sub-configuration.

In a possible implementation, the target identifier includes at least one of the following:
an identifier of a target sub-configuration;
a configuration order of a target sub-configuration among all valid sub-configurations; or
a configuration order of a target sub-configuration among all sub-configurations.

The apparatus for reporting a channel state information CSI report in the embodiments of this application may be an electronic device, such as an electronic device with an operating system, or a component in an electronic device, such as an integrated circuit or a chip. The electronic device may be a terminal, or other devices besides the terminal. By way of example, the terminal may include, but is not limited to, the types of terminal 11 listed above, and other devices may be servers, network attached storage (Network Attached Storage, NAS), and the like. This is not specifically limited in the embodiments of this application.

The apparatus for reporting a channel state information CSI report provided in the embodiments of this application can implement the processes implemented by the terminal in the above method embodiments in FIG. 3, with the same technical effects achieved. To avoid repetition, details are not repeated here.

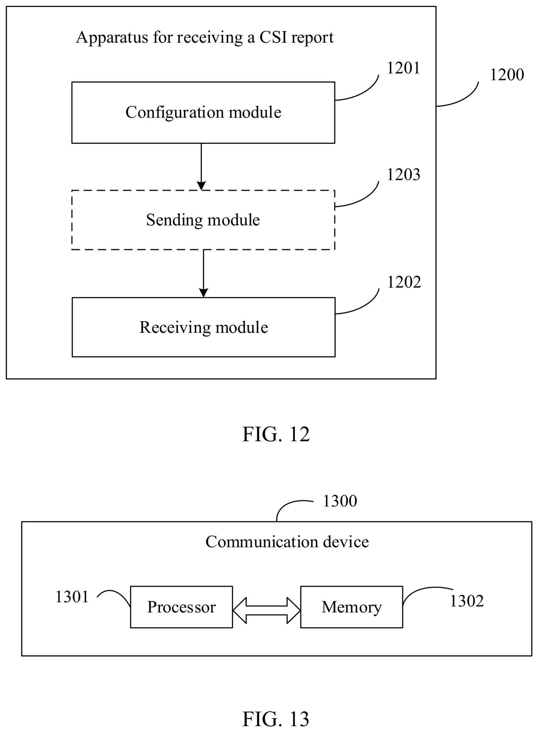

FIG. 12 is a schematic structural diagram of an apparatus for receiving a CSI report according to embodiments of this application. As shown in FIG. 12, the apparatus 1200 mainly includes a configuration module 1201 and a receiving module 1202.

In the embodiments of this application, the configuration module 1201 is configured to configure a CSI report configuration for a terminal, where the CSI report configuration includes multiple sub-configurations; and the receiving module 1202 is configured to receive a target CSI report reported by the terminal at a target CSI report occasion, where the target CSI report includes CSI corresponding to a target sub-configuration, the target sub-configuration is one or more sub-configurations in a set of valid sub-configurations in the CSI report configuration, and the set of valid sub-configurations includes at least one of the following: all sub-configurations in the CSI report configuration, one or more default sub-configurations in the CSI report configuration, or one or more activated sub-configurations in the CSI report configuration.

In a possible implementation, the target CSI report further includes a target identifier, and the target identifier is used to indicate relevant information of the target sub-configuration.

In a possible implementation, as shown in FIG. 12, the apparatus 1200 may further include: a transmitting module 1203 configured to transmit target indication information to the terminal, where the target indication information is used to determine the target sub-configuration corresponding to CSI to be reported at the target CSI report occasion.

In a possible implementation, the target indication information includes at least one of the following:
a set of valid sub-configurations in the CSI report configuration;
an identifier of a valid sub-configuration in the CSI report configuration;
an identifier of the CSI report configuration;
sub-configuration information corresponding to each target CSI report occasion within a target CSI report periodicity; or
the number of CSIs to be reported at each target CSI report occasion within a target CSI report periodicity.

The apparatus for receiving a CSI report in the embodiments of this application may be an electronic device, such as an electronic device with an operating system, or a component in an electronic device, such as an integrated circuit or a chip. The electronic device may be a terminal, or other devices besides the terminal. By way of example, the terminal may include, but is not limited to, the types of terminal 11 listed above, and other devices may be servers, network attached storage (Network Attached Storage, NAS), and the like. This is not specifically limited in the embodiments of this application.

The apparatus for receiving a CSI report provided in the embodiments of this application can implement the processes implemented by the terminal in the method embodiments of FIG. 10, with the same technical effects achieved. To avoid repetition, details are not repeated here.

As shown in FIG. 13, embodiments of this application further provide a communication device 1300 including a processor 1301 and a memory 1302. The memory 1302 stores a program or instruction capable of running on the processor 1301. For example, when the communication device 1300 is a terminal, the program or instruction, when executed by the processor 1301, implements the steps in the above method embodiments for reporting a channel state information CSI report, with the same technical effects achieved. When the communication device 1300 is a network-side device, the program or instruction, when executed by the processor 1301, implements the steps in the above method embodiments for receiving a CSI report, with the same technical effects achieved. To avoid repetition, details are not repeated here.

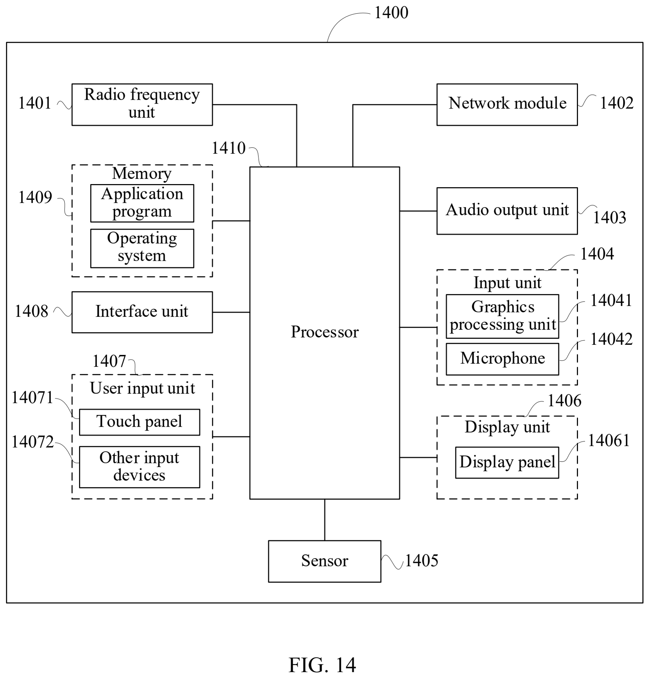

Embodiments of this application further provide a terminal, including a processor and a communication interface, where the communication interface is coupled to the processor, and the processor is configured to run a program or instruction to implement the steps in the method embodiment shown in FIG. 3. This terminal embodiment corresponds to the above terminal side method embodiment, and all processes and implementations in the above method embodiment are applicable to this terminal embodiment, with the same technical effects achieved. Specifically, FIG. 14 is a schematic diagram of a hardware structure of a terminal implementing embodiments of this application.

The terminal 1400 includes, but is not limited to at least some of components such as radio frequency unit 1401, network module 1402, audio output unit 1403, input unit 1404, sensor 1405, display unit 1406, user input unit 1407, interface unit 1408, memory 1409, and processor 1410.

Those skilled in the art can understand that the terminal 1400 may further include a power supply (such as a battery) for supplying power to the components, and the power supply may be logically connected to the processor 1410 through a power management system. In this way, functions such as charge management, discharge management, and power consumption management are implemented by using the power management system. The structure of the terminal shown in FIG. 14 does not constitute any limitation on the terminal. The terminal may include more or fewer components than shown in the figure, or a combination of some components, or the components disposed differently. Details are not repeated here.

It should be understood that in embodiments of this application, the input unit 1404 may include a graphics processing unit (Graphics Processing Unit, GPU) 14041 and a microphone 14042, and the graphics processing unit 14041 processes image data of static pictures or videos obtained by an image capture device (such as a camera) in a video capture mode or an image capture mode. The display unit 1406 may include a display panel 14061, and the display panel 14061 may be configured in the form of a liquid crystal display, an organic light emitting diode, etc. The user input unit 1407 includes at least one of a touch panel 14071 and other input devices 14072. The touch panel 14071 is also called a touch screen. The touch panel 14071 may include two parts: a touch detection device and a touch controller. Other input devices 14072 may include, but are not limited to, a physical keyboard, a function key (such as a volume control key or an on/off key), a trackball, a mouse, and a joystick. Details are not described herein.

In embodiments of this application, the radio frequency unit 1401 receives downlink data from a network-side device and transmits the data to the processor 1410 for processing; and the radio frequency unit 1401 may transmit uplink data to the network-side device. Generally, the radio frequency unit 1401 includes, but is not limited to, an antenna, an amplifier, a transceiver, a coupler, a low noise amplifier, and a duplexer.

The memory 1409 may be configured to store a software program or instruction and various data. The memory 1409 may mainly include a first storage area for storing the program or instruction and a second storage area for storing data, where the first storage area may store an operating system, an application program or instructions required by at least one function (for example, a sound playback function or an image playback function), and the like. In addition, the memory 1409 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1409 in the embodiments of this application includes, but is not be limited to, these or any other applicable types of memories.

The processor 1410 may include one or more processing units. Optionally, the processor 1410 integrates an application processor and a modem processor. The application processor mainly processes operations involving an operating system, a user interface, and an application program, or the like. The modem processor mainly processes radio communication signals, for example, being a baseband processor. It can be understood that the above modem processor may be alternatively not integrated into the processor 1410.

The processor 1410 is configured to determine, according to target information, a target sub-configuration corresponding to CSI to be reported at a target CSI report occasion, where the target sub-configuration is one or more sub-configurations in a set of valid sub-configurations in a CSI report configuration, the set of valid sub-configurations includes at least one of the following: all sub-configurations in the CSI report configuration, one or more default sub-configurations in the CSI report configuration, or one or more activated sub-configurations in the CSI report configuration, and the target information includes at least one of the following: a target rule or target indication information. The radio frequency unit 1401 reports a target CSI report at the target CSI report occasion, where the target CSI report includes CSI corresponding to the target sub-configuration.

It can be understood that for the implementation processes of various embodiments described herein, reference may be made to relevant descriptions of the method for reporting a channel state information CSI report in the method embodiment, with the same or corresponding technical effects achieved. To avoid repetition, details are not repeated here.

Embodiments of this application further provide a network-side device including a processor and a communication interface, where the communication interface is coupled to the processor, and the processor is configured to run a program or instruction to implement the steps in the method embodiment shown in FIG. 10. This network-side device embodiment corresponds to the above network-side device method embodiment and all implementation processes and implementations of the above method embodiment are applicable to this network-side device embodiment, with the same technical effects achieved.

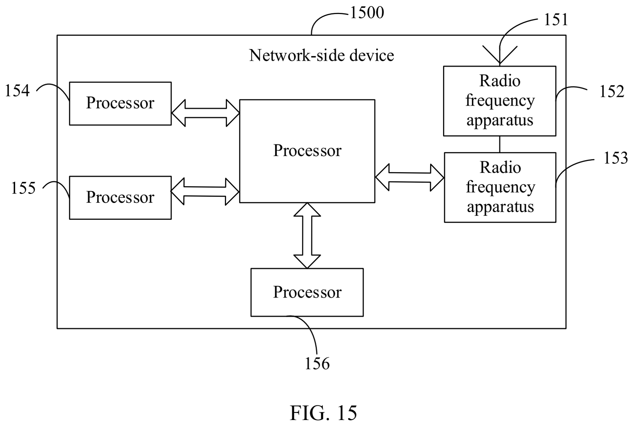

Specifically, embodiments of this application further provide a network-side device. As shown in FIG. 15, the network-side device 1500 includes an antenna 151, a radio frequency apparatus 152, a baseband apparatus 153, a processor 154, and a memory 155. The antenna 151 is connected to the radio frequency apparatus 152. In uplink, the radio frequency apparatus 152 receives information through the antenna 151, and transmits the received information to the baseband apparatus 153 for processing. In downlink, the baseband apparatus 153 processes to-be-transmitted information, and transmits the information to the radio frequency apparatus 152, and the radio frequency apparatus 152 processes the received information and then transmits the information out through the antenna 151.

The method executed by the network-side device in the above embodiments may be implemented in the baseband apparatus 153. The baseband apparatus 153 includes a baseband processor.

The baseband apparatus 153 may include, for example, at least one baseband processing unit on which multiple chips are disposed. As shown in FIG. 15, one of the chips is, for example, a baseband processor, and connected to the memory 155 through a bus interface, to call a program in the memory 155 and execute the operations of the network device shown in the above method embodiments.

The network-side device may further include a network interface 156, where the interface is, for example, a common public radio interface (Common Public Radio Interface, CPRI).

Specifically, the network-side device 1500 in the embodiments of this application further includes an instruction or program stored in the memory 155 and capable of running on the processor 154. The processor 154 calls the instruction or program in the memory 155 to execute the methods executed by the modules shown in FIG. 12, with the same technical effects achieved. To avoid repetition, details are not repeated here.

Optionally, embodiments of this application further provide a readable storage medium. A program or instruction is stored on the readable storage medium. When the program or instruction is executed by a processor, the processes of the method embodiments in FIG. 3 to FIG. 10 are implemented, with the same technical effects achieved. To avoid repetition, details are not repeated here.

The processor is the processor in the terminal described in the above embodiments. The readable storage medium includes a computer readable storage medium, such as a computer read-only memory ROM, a random access memory RAM, a magnetic disk, or an optical disc. In some examples, the readable storage medium may be a non-transitory readable storage medium.

Optionally, embodiments of this application further provide a chip. The chip includes a processor and a communication interface, where the communication interface is coupled to the processor, and the processor is configured to run a program or instruction to implement the processes of the method embodiments in FIG. 3 to FIG. 10, with the same technical effects achieved. To avoid repetition, details are not repeated here.

It should be understood that the chip mentioned in the embodiments of this application may also be referred to as a system-level chip, a system chip, a chip system, or a system-on-chip chip, or the like.

Embodiments of this application further provide a computer program/program product, where the computer program/program product is stored in a storage medium, and the computer program/program product is executed by at least one processor to implement the processes of the method embodiments in FIG. 3 to FIG. 10, with the same technical effects achieved. To avoid repetition, details are not repeated here.

Embodiments of this application further provide a system for reporting a CSI report, including a terminal and a network-side device, where the terminal is configured to execute the steps of the method for reporting a channel state information CSI report as described above, and the network-side device is configured to execute the steps of the method for receiving a CSI report as described above.

It should be noted that in this article, the terms "include", "comprise" or any other variants thereof are intended to cover non-exclusive inclusion, so that a process, method, article or device including a series of elements not only includes those elements, but also includes other elements not explicitly listed, or also includes elements inherent to such process, method, article or device. Without further restrictions, an element defined by the statement "including a..." does not exclude the existence of other identical elements in the process, method, article or device including the element. In addition, it should be pointed out that the scope of the methods and apparatuses in the embodiments of this application is not limited to performing functions in the order shown or discussed, but may also include performing functions in a basically simultaneous manner or in reverse order according to the functions involved, for example, the described method may be executed in an order different from the described order, and various steps may also be added, omitted or combined. In addition, features described with reference to certain examples may be combined in other examples.

By means of the description of the above embodiments, those skilled in the art can clearly understand that the methods in the above embodiments can be implemented by a computer software product with a necessary general hardware platform, and of course, may also be implemented by hardware. The computer software product is stored in a storage medium (such as ROM, RAM, magnetic disk, and optical disk), including several instructions to make a terminal or network-side device execute the methods described in various embodiments of this application.

The embodiments of this application have been described above in conjunction with the accompanying drawings, but this application is not limited to the above specific embodiments, which are merely illustrative rather than restrictive. Under the enlightenment of this application, those of ordinary skill in the art can make many forms of embodiments without departing from the purpose of this application and the scope protected by the claims, and these embodiments all fall within the protection of this application.

## Claims

1. A method for reporting a channel state information CSI report, comprising:
determining, by a terminal according to target information, a target sub-configuration corresponding to CSI to be reported at a target CSI report occasion, wherein the target sub-configuration is one or more sub-configurations in a set of valid sub-configurations in a CSI report configuration, the set of valid sub-configurations comprises at least one of the following: all sub-configurations in the CSI report configuration, one or more default sub-configurations in the CSI report configuration, or one or more activated sub-configurations in the CSI report configuration, and the target information comprises at least one of the following: a target rule or target indication information; and
reporting, by the terminal, a target CSI report at the target CSI report occasion, wherein the target CSI report comprises CSI corresponding to the target sub-configuration.

2. The method according to claim 1, wherein the target rule is related to at least one of the following:
a time domain position of the target CSI report occasion;
a time domain position of a channel state information reference signal CSI-RS resource corresponding to the set of valid sub-configurations in the CSI report configuration;
a time domain position of a CSI reference resource corresponding to the target CSI report occasion; or
a sub-configuration index in the set of valid sub-configurations in the CSI report configuration.

3. The method according to claim 2, wherein the determining, by a terminal according to the target rule, a target sub-configuration corresponding to CSI to be reported at the target CSI report occasion comprises at least one of the following:
determining the target sub-configuration based on the time domain position of the target CSI report occasion and the time domain position of the CSI-RS resource corresponding to the set of valid sub-configurations in the CSI report configuration;
determining the target sub-configuration based on the time domain position of the CSI reference resource corresponding to the target CSI report occasion;
determining the target sub-configuration based on a target time domain position of the target CSI report occasion and a correspondence between the target time domain position and a sub-configuration in the set of valid sub-configurations in the CSI report configuration; or
selecting the target sub-configuration corresponding to CSI that meets a condition according to the target rule.

4. The method according to claim 3, wherein the determining the target sub-configuration based on the time domain position of the target CSI report occasion and the time domain position of the CSI-RS resource corresponding to the set of valid sub-configurations in the CSI report configuration comprises:
determining a sub-configuration corresponding to a first CSI-RS resource as the target sub-configuration, wherein the first CSI-RS resource is one or more CSI-RS resources closest to the time domain position of the target CSI report occasion among the CSI-RS resource corresponding to the set of valid sub-configurations.

5. The method according to claim 3, wherein the determining the target sub-configuration based on the time domain position of the CSI reference resource corresponding to the target CSI report occasion comprises at least one of the following:
determining a sub-configuration used by a first physical downlink shared channel PDSCH as the target sub-configuration, wherein the first PDSCH is one or more PDSCHs closest to the time domain position of the CSI reference resource corresponding to the target CSI report occasion;
determining a sub-configuration corresponding to a second CSI-RS resource as the target sub-configuration, wherein the second CSI-RS resource is a CSI-RS resource closest to the time domain position of the CSI reference resource corresponding to the target CSI report occasion among the CSI-RS resource corresponding to the set of valid sub-configurations; or
determining a sub-configuration corresponding to a third CSI-RS resource as the target sub-configuration, wherein the third CSI-RS resource is one or more CSI-RS resources at the time domain position of the CSI reference resource corresponding to the target CSI report occasion.

6. The method according to claim 3, wherein the determining the target sub-configuration based on a target time domain position of the target CSI report occasion and a correspondence between the target time domain position and a sub-configuration in the set of valid sub-configurations in the CSI report configuration comprises:
determining, by the terminal, at least one CSI report occasion comprised in multiple target CSI report periodicities; and
determining a target time domain position of the target CSI report occasion within the target CSI report periodicity, and determining a sub-configuration corresponding to the target time domain position in the correspondence to be the target sub-configuration.

7. The method according to claim 6, wherein the determining, by the terminal, at least one CSI report occasion comprised in multiple target CSI report periodicities comprises:
determining that the k-th target CSI report periodicity comprises CSI report occasions from the ((k-1)*N)-th to the (k*N-1)-th; wherein
N is at least one of the following:
a predefined value;
a value configured or indicated by a network;
a value reported or indicated by the terminal;
the number of sub-configurations in the set of valid sub-configurations in the CSI report configuration; or
the quotient of the number of sub-configurations in the set of valid sub-configurations in the CSI report configuration divided by the number of CSIs corresponding to sub-configurations comprised at each CSI report occasion; and
k=1, 2, ..., K, K being the number of periodicities for CSI reporting.

8. The method according to claim 6, wherein the correspondence is determined through at least one of the following:
determining CSIs corresponding to sub-configurations to be reported at each target CSI report occasion within each target CSI report periodicity according to a configuration of a network-side device;
determining CSIs corresponding to sub-configurations to be reported at each target CSI report occasion within each target CSI report periodicity according to an indication of a network-side device; or
determining CSIs corresponding to sub-configurations to be reported at each CSI report occasion within each periodicity according to a predefined rule.

9. The method according to claim 3, wherein the selecting the target sub-configuration corresponding to CSI that meets a condition according to the target rule comprises at least one of the following:
determining to report CSI with the largest or smallest rank indication RI among CSIs corresponding to multiple activated sub-configurations at each target CSI report occasion within each target CSI report periodicity;
determining to report CSI with the largest or smallest channel quality indicator CQI among CSIs corresponding to multiple activated sub-configurations at each target CSI report occasion within each target CSI report periodicity; or
determining to report CSI with the largest or smallest CQI*R*RI value among CSIs corresponding to multiple activated sub-configurations at each target CSI report occasion within each target CSI report periodicity; wherein
CQI is the index of a target row in a CQI table, and R is the code rate.

10. The method according to claim 3, wherein the selecting the target sub-configuration corresponding to CSI that meets a condition according to the target rule comprises at least one of the following:
determining to report one of CSIs corresponding to multiple activated sub-configurations at each target CSI report occasion in an order determined by the magnitude of RIs of the CSIs for various target CSI report occasions within each target CSI report periodicity;
determining to report one of CSIs corresponding to multiple activated sub-configurations at each target CSI report occasion in an order determined by the magnitude of CQIs for various target CSI report occasions within each target CSI report periodicity;
determining to report one of CSIs corresponding to multiple activated sub-configurations at each target CSI report occasion in an order determined by the magnitude of reported CQI*R*RI for various target CSI report occasions within each target CSI report periodicity; wherein
CQI is the index of a target row in a CQI table, and R is the code rate.

11. The method according to claim 1, wherein the target indication information comprises at least one of the following:
a set of valid sub-configurations in the CSI report configuration;
an identifier of a valid sub-configuration in the CSI report configuration;
an identifier of the CSI report configuration;
sub-configuration information corresponding to each target CSI report occasion within a target CSI report periodicity; or
the number of CSIs to be reported at each target CSI report occasion within a target CSI report periodicity.

12. The method according to claim 1, wherein the target sub-configuration is associated with at least one of the following parameters in the CSI report configuration:
CSI-RS resource set;
CSI-RS resource group in a CSI-RS resource set;
power offset parameter of CSI-RS resource relative to synchronization signal block SSB;
PDSCH power offset parameter assumed by a terminal for CSI reporting;
time-frequency resource mapping of CSI-RS;
antenna parameters, wherein the antenna parameters comprise: number of antenna ports and an antenna shutdown pattern;
content of CSI report; or
codebook configuration.

13. The method according to claim 12, wherein parameters in the CSI report configuration comprise multiple parameters, and each parameter corresponds to multiple values, the i-th sub-configuration is a set consisting of the i-th value of each of multiple parameters of the CSI report configuration parameters, wherein i=1, 2, ..., M, M being the number of parameters in the CSI report configuration.

14. The method according to claim 1, wherein the reporting, by the terminal, a target CSI report at the target CSI report occasion comprises at least one of the following:
reporting, by the terminal, CSI corresponding to CSI report content configured by the target sub-configuration at the target CSI report occasion;
in a case that the target sub-configuration belongs to a baseline sub-configuration, reporting, by the terminal, complete CSI at the target CSI report occasion;
in a case that the target sub-configuration does not belong to a baseline sub-configuration, reporting, by the terminal, CSI that does not comprise at least one of CQI, CRI, RI, or PMI at the target CSI report occasion;
in a case that the target sub-configuration does not belong to a baseline sub-configuration, in CSI to be reported by the terminal at the target CSI report occasion, CQI being a differential CQI relative to the baseline sub-configuration;
in a case that the target sub-configuration does not belong to a baseline sub-configuration, in CSI to be reported by the terminal at the target CSI report occasion, RI being a differential RI relative to the baseline sub-configuration;
in a case that the target sub-configuration does not belong to a baseline sub-configuration, in CSI to be reported by the terminal at the target CSI report occasion, CRI being a differential CRI relative to the baseline sub-configuration.

15. The method according to any one of claims 1 to 14, wherein the reporting, by the terminal, a target CSI report at the target CSI report occasion comprises:
reporting, by the terminal, CSI corresponding to the target sub-configuration at the target CSI report occasion based on CSI reported at a first CSI report occasion.

16. The method according to claim 15, wherein the first CSI report occasion comprises at least one of the following:
a CSI report occasion comprising a baseline sub-configuration closest to the target CSI report occasion;
a CSI report occasion comprising a baseline sub-configuration a specific time before the target CSI report occasion;
a CSI report occasion configured by a network-side device;
a CSI report occasion indicated by a network-side device; or
a CSI report occasion at a specific position in each report periodicity.

17. The method according to claim 15 or 16, wherein the baseline sub-configuration comprises at least one of the following:
a baseline sub-configuration configured by a network-side device;
a sub-configuration with the smallest index in the set of valid sub-configurations;
a sub-configuration with the largest index in the set of valid sub-configurations;
a sub-configuration with the largest number of antenna ports in the set of valid sub-configurations;
a sub-configuration with the smallest PDSCH power offset assumed by CSI report in the set of valid sub-configurations;
a sub-configuration with the largest PDSCH power offset assumed by CSI report in the set of valid sub-configurations;
a sub-configuration with the smallest power offset of a corresponding CSI-RS relative to PDSCH in the set of valid sub-configurations; or
a sub-configuration with the largest power offset of a corresponding CSI-RS relative to PDSCH in the set of valid sub-configurations.

18. The method according to claim 1, wherein in a case that the target information comprises the target rule, the target CSI report further comprises a target identifier, and the target identifier is used to indicate relevant information of the target sub-configuration.

19. The method according to claim 18, wherein the target identifier comprises at least one of the following:
an identifier of a target sub-configuration;
a configuration order of a target sub-configuration among all valid sub-configurations; or
a configuration order of a target sub-configuration among all sub-configurations.

20. A method for receiving a CSI report, comprising:
configuring, by a network-side device, a CSI report configuration for a terminal, wherein the CSI report configuration comprises multiple sub-configurations;
receiving, by the network-side device, a target CSI report reported by the terminal at a target CSI report occasion, wherein the target CSI report comprises CSI corresponding to a target sub-configuration, the target sub-configuration is one or more sub-configurations in a set of valid sub-configurations in the CSI report configuration, and the set of valid sub-configurations comprises at least one of the following: all sub-configurations in the CSI report configuration, one or more default sub-configurations in the CSI report configuration, or one or more activated sub-configurations in the CSI report configuration.

21. The method according to claim 20, wherein the target CSI report further comprises a target identifier, and the target identifier is used to indicate relevant information of the target sub-configuration.

22. The method according to claim 20, wherein the method further comprises:
transmitting, by the network-side device, target indication information to the terminal, wherein the target indication information is used to determine the target sub-configuration corresponding to CSI to be reported at the target CSI report occasion.

23. The method according to claim 22, wherein the target indication information comprises at least one of the following:
a set of valid sub-configurations in the CSI report configuration;
an identifier of a valid sub-configuration in the CSI report configuration;
an identifier of the CSI report configuration;
sub-configuration information corresponding to each target CSI report occasion within a target CSI report periodicity; or
the number of CSIs to be reported at each target CSI report occasion within a target CSI report periodicity.

24. An apparatus for reporting a CSI report, comprising:
a determining module, configured to determine, according to target information, a target sub-configuration corresponding to CSI to be reported at a target CSI report occasion, wherein the target sub-configuration is one or more sub-configurations in a set of valid sub-configurations in a CSI report configuration, the set of valid sub-configurations comprises at least one of the following: all sub-configurations in the CSI report configuration, one or more default sub-configurations in the CSI report configuration, or one or more activated sub-configurations in the CSI report configuration, and the target information comprises at least one of the following: a target rule or target indication information; and
a reporting module, configured to report a target CSI report at the target CSI report occasion, wherein the target CSI report comprises CSI corresponding to the target sub-configuration.

25. An apparatus for receiving a CSI report, comprising:
a configuration module, configured to configure a CSI report configuration for a terminal, wherein the CSI report configuration comprises multiple sub-configurations; and
a receiving module, configured to receive a target CSI report reported by the terminal at a target CSI report occasion, wherein the target CSI report comprises CSI corresponding to a target sub-configuration, the target sub-configuration is one or more sub-configurations in a set of valid sub-configurations in the CSI report configuration, and the set of valid sub-configurations comprises at least one of the following: all sub-configurations in the CSI report configuration, one or more default sub-configurations in the CSI report configuration, or one or more activated sub-configurations in the CSI report configuration.

26. A terminal, comprising a processor and a memory, wherein the memory stores a program or instruction capable of running on the processor, and when the program or instruction is executed by the processor, the steps of the method for reporting a channel state information CSI report according to any one of claims 1 to 19 are implemented.

27. A network-side device, comprising a processor and a memory, wherein the memory stores a program or instruction capable of running on the processor, and when the program or instruction is executed by the processor, the steps of the method for receiving a CSI report according to any one of claims 20 to 23 are implemented.

28. A readable storage medium, wherein a program or instruction is stored on the readable storage medium, and when the program or instruction is executed by a processor, the method for reporting a channel state information CSI report according to any one of claims 1-19 is implemented, or the steps of the method for receiving a CSI report according to any one of claims 20 to 23 are implemented.
